# EUROPEAN PATENT SPECIFICATION

(11) **EP 4 034 468 B1**
(45) Date of publication and mention of the grant of the patent: **15.11.2023**
(21) Application number: 20775635.4
(22) Date of filing: 23.09.2020
(51) Int. Cl.: B65D 8/00, B65D 77/06, B67D 1/04, B67D 1/08

(54) **RFID-EQUIPPED PRESSURE CHAMBER FOR KEG**
DRUCKKAMMER FÜR KEG MIT RFID
CHAMBRE DE PRESSION ÉQUIPÉE DE RFID POUR FÛT

(30) Priority: 23.09.2019 EP 19199007
(43) Date of publication of application: 03.08.2022
(73) Proprietor: Carlsberg Breweries A/S, 1799 Copenhagen V (DK)
(72) Inventor: BACH, Peter, 1799 Copenhagen V (DK)
(74) Representative: Høiberg P/S
(86) International application number: PCT/EP2020/076493
(87) International publication number: WO 2021/058520

(56) References cited:
- WO-A2-2007/019848
- DE-U1-202013 007 693
- US-A1- 2017 337 535

## Description

The present disclosure relates to a radio-frequency identification (RFID)-equipped pressure chamber for a beverage container, in particular a single use collapsible beverage container. The disclosure further relates to a pressure system comprising a radio-frequency identification-equipped pressure chamber and a collapsible beverage container comprising a radio-frequency identification tag.

### Background of invention

Beverage dispensing systems are typically used in beverage dispensing establishments for efficiently dispensing large quantities of beverage. Typically, beverage dispensing systems are used to dispense carbonated alcoholic beverages such as draught beer and cider. However, also non-alcoholic beverages such as non-alcoholic beers, soft drinks and non-carbonated beverages such as wine and fruit juice may be dispensed using a beverage dispensing system.

Professional beverage dispensing systems typically dispense beverage provided in large beverage kegs. Such beverage kegs may for instance hold 20-50 L of beverage for a professional beverage dispensing system for allowing typically 50-100 beverage dispensing operations before needing to exchange the beverage keg. Typically, beverage kegs are made of solid materials such as steel and re-filled a number of times. In between each filling, the beverage kegs are carefully cleaned. More recently, systems having collapsible and single-use kegs have been developed, at least partly due to hygiene concerns. Such beverage dispensing systems, using collapsible beverage kegs, can have the beverage keg installed or placed in a pressure chamber. Thus, while there is a need to pressurize conventional steel kegs with CO₂, for instance by means of a CO₂-cartridge connected to the keg during dispensing, single use beverage systems, such as the applicant's DraughtMaster^{™}, or the bag in container systems such as Heineken Blade^{®} or BeerTender^{®} or Anheusher-Bush InBev PureDraught^{®}, uses air from a pressure source, e.g. an air compressor, to push the beer out and collapsing the keg or bag inside the container (hereinafter just termed keg), which means that nothing touches the beer from when it leaves the brewery until it goes in the beverage recipient, e.g. beer glass. Accordingly, the beverage stored in such collapsible beverage container is pre-carbonized or potentially pre-mixed with nitrogen when dispensing English type beer such as ales and stouts. When dispensing the beverage, the pressure fluid e.g. compressed air, is allowed to enter the pressure chamber, causing the beverage keg to collapse while dispensing the beverage. The volume of the beverage keg is reduced corresponding to the amount of dispensed beverage. The collapsible beverage kegs are preferably made of flexible and disposable material such as plastic.

In order to manage and keep track of the replaceable beverage containers, the containers may be equipped with RFID tags, such as near field communication (NFC) tags. Besides having a unique identification, the system can, for example, extract information about the beverage, such as type of beverage, volume of the container, date and/or origin of production, alcohol percentage if applicable, etc., either directly from the tag or by processing a database. The use of RFID tags is known for steel kegs, and more recently, also for beverage systems comprising single use collapsible kegs. However, the fact that the collapsible beverage kegs are installed in a pressure chamber, under a number of physical constraints, introduces technical challenges and inconveniences regarding the communication between the RFID interrogator and the RFID tag. It is an object of the present disclosure to overcome one or more of these challenges and inconveniences.

WO 2007/019848 A2 discloses an assembly for dispensing a beverage.

DE 20 2013 007693 U1 discloses a rigid beer keg wherein a separate annular element for carrying an antenna is placed around the outlet.

US 2017/337535 A1 discloses a liquid product dispensing container device for affixes to a liquid product dispensing container, such as a beer keg, for monitoring, controlling and/or optimizing flow of a liquid product delivered to consumers from the liquid product dispensing container.

### Summary of invention

The present disclosure relates, in a first embodiment, to a radio-frequency identification-equipped pressure chamber for a beverage container, said pressure chamber comprising:
- a lid part;
- a base part, said lid and said base part defining a sealed inner space for accommodating and encapsulating said beverage container, said base part or lid part comprising:
   ∘ an inner connector part adapted to be engaged to a corresponding beverage container outlet, said inner connector part arranged on an inside of the base part or lid part; and
   ∘ an outer substantially annular gasket part arranged on the inside of the base part or lid part and surrounding the inner connector part, said outer substantially annular gasket part adapted to be engaged with a corresponding hollow annular space of a closure of the beverage container, the outer substantially annular gasket part comprising a substantially planar annular antenna adapted to propagate radio waves to a radio-frequency identification tag arranged on an outer rim of the closure.

The outer substantially annular gasket part shall be seen a three-dimensional body, i.e. it has an annular shape with a certain height. The outer substantially annular gasket part may thereby be a toroid or the upper-half of a toroid. The shape of the toroid is not necessarily fully regular and may be revolved based on a rectangular, square and/or circle or a combination. The function of the outer substantially annular gasket part is to be introduced into a corresponding hollow part of the closure to seal the connecting between the tapping line and the container.

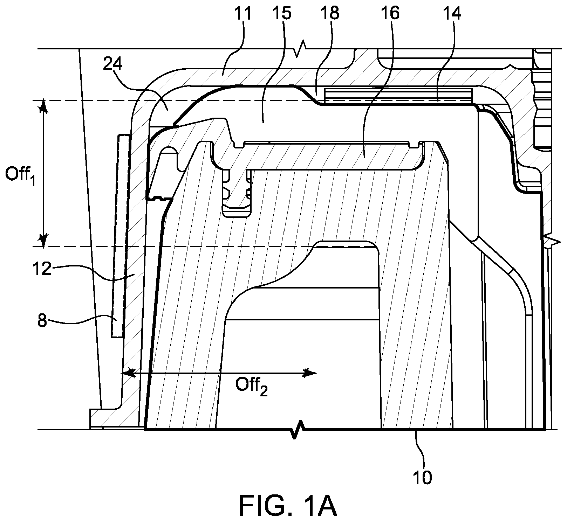

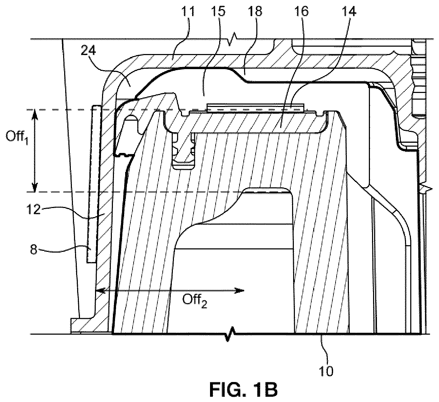

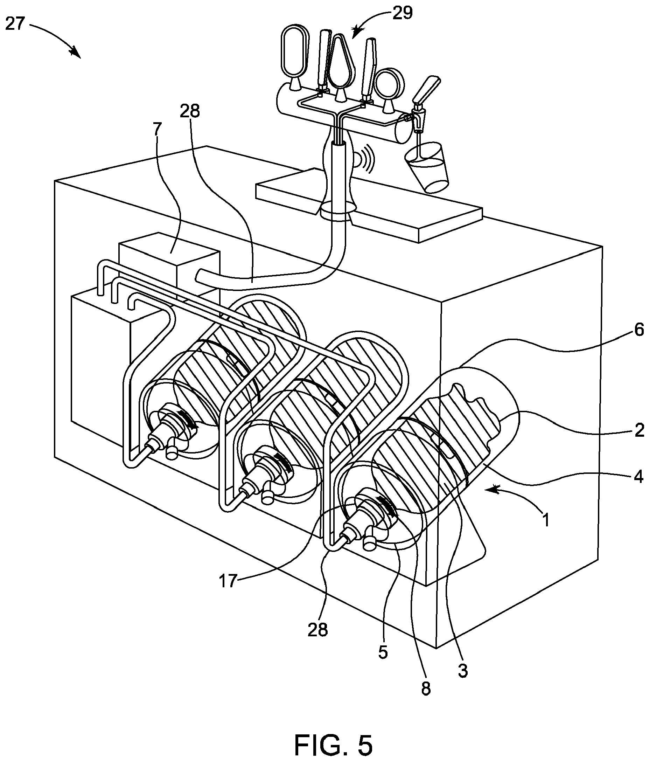

The base part and the lid part constitute the sealed pressure chamber for encapsulating the collapsible keg. The keg, which has a beverage container outlet, will typically also have a closure for cooperation with a coupler of a beverage dispensing system, preferably through the base part. The closure may have an outer rim, on which an RFID tag, such as an NFC tag, may be arranged, as illustrated in, for example, fig. 1 and fig. 5. The pressure chamber is typically a fixed installation, whereas the collapsible keg is typically single use and replaced when it has been emptied. According to one embodiment of the invention, the base part is equipped with an outer substantially annular gasket part arranged on the inside of the base part, such as in the bottom of the base part of the pressure chamber. "Annular" shall, in this regard, be construed broadly as a shape having a through hole and a minimum height that makes it suitable for introducing it into a corresponding hollow annular space of the closure of the collapsible beverage container. The annular shape may be seen as a donut shape with possible irregularities. When placing a keg in the pressure chamber, the substantially annular gasket part is introduced into the corresponding hollow annular space of the closure into a sealed configuration. If a substantially planar annular antenna is arranged on the substantially annular gasket part, the antenna can also be introduced into the hollow annular space of the closure. From a position in the hollow annular space it can be arranged and adapted to propagate radio waves to the RFID tag arranged of an outer rim of the closure, thereby interrogating the RFID tag locally for the specific keg. Preferably, the substantially planar annular antenna is an omnidirectional antenna.

Further details regarding the physical constraints, integration of the substantially planar annular antenna (interrogation antenna), positioning of the interrogation antenna and RFID tag, antenna design and other aspects of the invention are set forth in the following detailed description of the invention.

The disclosure further relates to a pressure system for a beverage comprising:
- a collapsible beverage container comprising a closure with a beverage outlet, the closure having an outer rim and a radio-frequency identification tag arranged on said rim;
- a pressure chamber comprising:
   ∘ a lid part;
   ∘ a base part, said lid and said base part defining a sealed inner space for accommodating and encapsulating the collapsible beverage container, said base part or lid part comprising:
      ▪ an inner connector part adapted to be engaged to the beverage outlet, said inner connector part arranged on an inside of the base part or lid part; and
      ▪ an outer substantially annular gasket part arranged on the inside of the base part or lid part and surrounding the inner connector part, said outer substantially annular gasket part adapted to be engaged with a corresponding hollow annular space of the closure of the collapsible beverage container, the outer substantially annular gasket part comprising a substantially planar annular antenna adapted to propagate radio waves to the radio-frequency identification tag.

The "pressure system" can thereby be seen as an assembly comprising a collapsible beverage container and a pressure chamber for accommodating and encapsulating the collapsible beverage container. In this assembly the beverage chamber and the collapsible keg may comprise a two-way radio transmitter-receiver connection using a given frequency. The pressure system may be part of a beverage dispensing system in the form of a modular system comprising a plurality of collapsible beverage containers and pressure chambers sharing a common tapping line.

### Description of drawings

**Fig. 1A** shows a cross-section of an outer substantially annular gasket part of a base part of a pressure chamber inserted in a corresponding hollow annular space of a closure of a beverage container. The substantially annular gasket part comprises a substantially planar annular antenna arranged in a space between the annular keg gasket locking flange (15) and a top wall of the closure (12).
**Fig. 1B** shows a cross-section of an outer substantially annular gasket part of a base part of a pressure chamber inserted in a corresponding hollow annular space of a closure of a beverage container. The substantially annular gasket part comprises a substantially planar annular antenna arranged in a space between the annular keg gasket part (16) and keg gasket locking flange (15).
**Fig. 2** shows a cross-section of an outer substantially annular gasket part of a base part of a pressure chamber partly inserted in a closure of a keg.
**Fig. 3** show embodiments of a substantially planar annular antenna integrated in a base piece, such as a piece of plastic or a printed circuit board.
**Fig. 4** shows an example of a simplified schematic of a matching network for the presently disclosed radio-frequency identification-equipped pressure chamber.
**Fig. 5** shows a beverage dispensing system as a modular system comprising three pressure chambers with collapsible beverage filled containers.

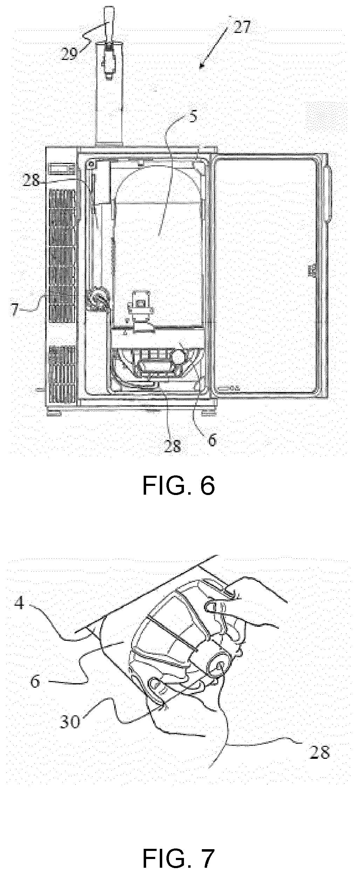

**Fig. 6** shows a beverage dispensing system as a flex system comprising one pressure chamber where the closure of the beverage container is inserted into the lid part of the pressure chamber when assembled.
**Fig. 7** shows an embodiment in which the tapping line is in fluid communication with the outlet of the beverage container through the lid of the pressure chamber, where the inside of the lid comprises elements similar to those disclosed in Fig 1A and 1B.

### Detailed description of the invention

The present disclosure relates to radio-frequency identification-equipped pressure chamber for a beverage container, said pressure chamber comprising: a lid part; and a base part, said lid and said base part defining a sealed inner space for accommodating and encapsulating the beverage container. Preferably, the base part comprises an inner connector part adapted to be engaged to a corresponding beverage container outlet; and an outer substantially annular gasket part and surrounding the inner connector part. Together the inner connector part and the outer substantially annular gasket part may constitute a coupler, which, when engaging with the closure on the beverage container, forms a space sealed from the pressure chamber. Both the inner connector part and the outer substantially annular gasket part, i.e. the coupler, is, preferably, arranged on the inside of the base part, even more preferably at the bottom of the base part. The inside of the base part is defined as the inside of the pressure chamber, i.e. the sealed side, which is also the side towards the beverage container when the beverage container is encapsulated inside the pressure chamber. The outer substantially annular gasket part of the base part may be adapted to be engaged with a corresponding hollow annular space of a closure of the beverage container when placed inside the pressure chamber.

In an alternative system, the lid part comprises a coupler which is preferably, arranged on the inside of the lid part, even more preferably at the bottom of the lid part. The inside of the lid part is defined as the inside of the pressure chamber, i.e. the sealed side, which is also the side towards the beverage container, in particular the beverage container outlet, when the beverage container is encapsulated inside the pressure chamber. The outer substantially annular gasket part of the lid part may be adapted to be engaged with a corresponding hollow annular space of a closure of the beverage container when placed inside the pressure chamber. The substantially planar annular antenna may, for example, be arranged between the keg gasket locking flange and the keg gasket.

When installed in a beverage dispensing system like the applicant's DraughtMaster^{™}, the beverage container is typically oriented in a predetermined position such as an "upside down" position, i.e. the beverage container outlet is oriented in a downward direction. The coupler is typically rigid and suitable for supporting the weight of the beverage container. When installed in a beverage dispensing system, there is a fluid-tight connection between the beverage container outlet and a tapping line, alternatively the tapping line is already connected to the outlet in the keg prior to installation. The keg, which has a beverage container outlet, typically has a closure for cooperation with a coupler of a beverage dispensing system, either through the base part or the lid part. The beverage container may be equipped with an RFID tag, such as an NFC tag. Preferably, the RFID/NFC tag is arranged on the closure of the beverage container, such as on the outer rim of the closure. According to one embodiment of the presently disclosed RFID-equipped pressure chamber, the substantially annular gasket part of the coupler comprises a substantially planar annular antenna adapted to propagate radio waves to an RFID tag arranged on the beverage container, such as on the outer rim of the closure. WO2019/158562 describes the use of RFID tags on collapsible beverage containers.

The inventors have realized that rather than having an RFID tag and RFID interrogator on the outside of the pressure chamber, it would be possible and advantageous to integrate at least the interrogation antenna on the inside of the coupler located in base part or lid part, to facilitate maintenance and upgrading of systems. The inventors have also realized that by using a planar annular antenna and placing it on the substantially annular gasket part of the coupler in the pressure chamber, challenges related to the relative positioning with respect to the RFID tag and lack of space in the pressure chamber can be addressed. The present invention may thereby present a solution which takes into account both the geometry of the pressure chamber and beverage container and requirements related to magnetic field strengths at the RFID tag.

As is well-known in the art, RFID enables uniquely identifying items using radio waves. The NFC/RFID system comprises a reader and a tag. The reader, or interrogator, is a two-way radio transmitter-receiver that sends a radio frequency signal to the tag via an antenna, and the tag absorbs the frequency which causes it to become active and radiate back, and thereby respond with its unique information stored in the tag. Typically the interrogator has an interrogation antenna and the RFID tag has a target antenna. The RFID tag arranged on the collapsible container, such as on the closure of said container is preferably a passive RFID tag which is energized by radiation of the interrogator's radiated field (the antenna in the substantial annular gasket part in the pressure chamber). In the present disclosure, RFID tag refers to a transponder with a target antenna. According to one embodiment of the presently disclosed radio-frequency identification-equipped pressure chamber, the RFID tag is mounted on the rim of the closure of the beverage container. The interrogation part may have a substantially planar annular antenna, which shall be seen as the interrogation antenna. The interrogator part may further comprise an interrogation circuit/reader, which may be integrated in the substantially annular gasket part, such as integrated in the top section of the outer substantially annular gasket part, or integrated in a printed circuit board.

NFC is a specialized subset in RFID technology. Within the scope of the present disclosure, NFC shall be construed as a non-limiting embodiment of RFID. The RFID interrogator, RFID antenna, RFID tag and RFID tag antenna, may accordingly, but not necessarily be an NFC interrogator, NFC antenna, NFC tag and NFC tag antenna, respectively.

### Physical arrangements of gasket part (of chamber), closure part (of keg) and RFID interrogator antenna

The collapsible beverage container may comprise a collapsible body and a closure with a beverage outlet configured for engagement with a connector of a beverage dispensing system. The closure may have an outer rim, such as a substantially cylindrical outer rim, and an inner rim, such as a substantially cylindrical inner rim. The closure may further comprise a top wall. The outlet of the container may be connected through an inner cylindrical or tubular connection inside the inner rim. This connection may comprise a valve or mechanisms for controlling the flow of the beverage. The inner connector part of the coupler is, preferably, adapted to be engaged to the beverage outlet. In a mounted configuration, wherein the keg is placed in the pressure chamber and connected to a tapping line, the inner connector part is, preferably, located inside the inner rim of the closure.

The outer substantially cylindrical rim, the substantially cylindrical inner rim and the top wall may define a hollow annular space of the closure, into which the outer substantially annular gasket part can be introduced in a sealed configuration.

The outer substantially annular gasket part may comprise a keg gasket locking flange, which may constitute a top section of the outer substantially annular gasket part, as shown in the example of fig. 1A. The keg gasket locking flange may be of a substantially rigid material, such as plastic or rubber. Preferably, the keg gasket locking flange is configured to fit tightly to the inner rim of the closure in the sealed configuration. Beneath the keg gasket locking flange there may be a more resilient keg gasket. The keg gasket may be of a resilient material, or a material that is at least more resilient than that of the keg gasket locking flange.

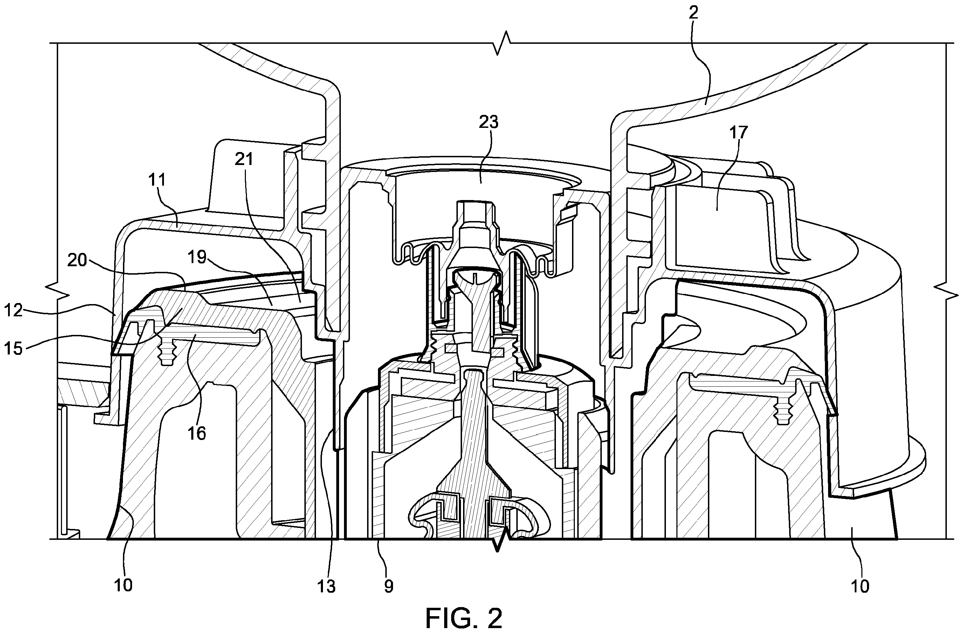

The substantially annular gasket part may have a top surface, i.e. a surface towards the keg in the mounted position. Fig. 1A may serve as an illustration of an example of a top surface 18 of the keg gasket locking flange (15) which constitutes the top section of a substantially annular gasket part 10. The top surface may have an annular inner section and an annular outer section. Fig. 1B may serve as an illustration of an example of a top surface of the keg gasket locking flange (15) which constitutes the top section of a substantially annular gasket part (10). The top surface has an annular inner section and an annular outer section. These sections are also exemplified in fig. 2, wherein 19 is an annular inner section (surface) and 20 is an annular outer section (surface). The annular outer section may be arranged closer than the annular inner section to a top wall of the closure (11) in the sealed configuration. Thereby, the annular inner section of the top surface of the keg gasket locking flange and the top wall of the closure may define an antenna space for the substantially planar annular antenna in the sealed configuration. The substantially planar annular antenna does not necessarily have to be placed on top of the top surface. There may be an additional sheath over the antenna, such as a plastic sheath. Alternatively, the substantially planar antenna may be entirely integrated in the in the substantially annular gasket part, such as integrated in the top section of the outer substantially annular gasket part. In the example of fig. 1, a substantially annular antenna space 21 is a space between the top wall of the closure and the annular inner section of the top surface. The substantially planar annular antenna may be arranged on the annular inner section of the top surface, or integrated in the outer substantially annular gasket part.

### Substantially planar annular antenna

The antenna may be designed to achieve certain minimum magnetic field strength requirements for the given physical constraints, i.e. the limitations in space and the position of the RFID tag. Two such standards are ISO/IEC 15693 and ISO/IEC 14443.

Preferably, the substantially planar annular antenna is integrated in a substantially planar annular printed circuit board and/or integrated in the substantially annular gasket part, such as integrated in the keg gasket locking flange and/or the top section of the outer substantially annular gasket part. As stated, the keg gasket locking flange may be made of a substantially rigid material, such as plastic or rubber, into which the substantially planar annular antenna may be molded or printed. The substantially planar annular printed circuit board may be adapted to fit in the antenna space. There may be an additional sheath over the antenna, such as a plastic sheath.

The substantially planar annular printed circuit board may further comprise an interrogation circuit and further required electronic components and circuits. The interrogation circuit and/or further required electronic components and circuits may be mounted on a printed circuit board or other base piece, such as a plastic piece, for holding the antenna and components together. The interrogation circuit, or, alternatively the base piece, and/or the entire assembly may be placed on the substantially annular gasket part and/or be integrated in the substantially annular gasket part, such as integrated in the keg gasket locking flange and/or the top section of the outer substantially annular gasket part.

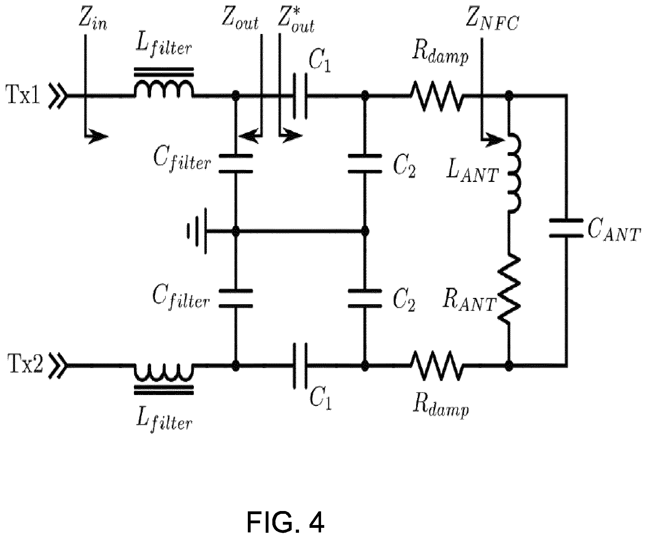

The substantially planar annular antenna may be arranged with a first offset in height in relation to the radio-frequency identification tag on the keg and with a second offset in circumferential distance from the outer edge of the substantially planar annular antenna to the radio-frequency identification tag. The offset in height can be seen as the longitudinal extension of the keg and the pressure chamber in, for example, fig. 4. Within the present disclosure, this may also be referred to as the Z dimension in a Cartesian coordinate system. The first offset may be seen as the distance between the substantially planar annular antenna and a center of the RFID tag in the Z dimension, as illustrated in fig. 1. The first offset (Off₁) may be between 5.5 and 18.5 mm, such as between 5.5 mm and 15.5 mm, such as between 8.5 mm and 18.5 mm, preferably between 7.5 and 16.5, such as between 7.5 and 13.5, such as between 10.5 mm and 16.5 mm, such as 13.5 mm and in particular 10.5 mm.

The second offset can be seen as the distance between the substantially planar annular antenna and the RFID tag in the X-Y dimension, i.e. in the extension of the planar antenna, as illustrated in fig. 1. The second offset (Off₂) may be between 10.7 mm and 22.7 mm, preferably between 13.7 mm and 19.7 mm, such as 16.7 mm.

In one embodiment of the presently disclosed radio-frequency identification-equipped pressure chamber, the substantially planar annular antenna and the radio-frequency identification tag extend in substantially orthogonal directions, as illustrated in fig. 1. Preferably, the substantially planar annular antenna is configured to generate a magnetic field component orthogonal to the radio-frequency identification tag, wherein the magnetic field component has a local maximum at the radio-frequency identification tag.

The substantially planar annular antenna may have a substantially circular shape. The substantially planar annular may therefore have a substantially circular inner edge and a substantially circular outer edge. The antenna may take a number of shapes in terms of, for example, number of turns. The substantially planar annular antenna may be a spiral antenna, such as a two turn spiral antenna, a single turn antenna or a two turn antenna, the substantially planar annular antenna having an outer diameter *dₒᵤₜ* and an inner diameter *dᵢₙ*. Preferably, the outer diameter *dₒᵤₜ* and an inner diameter *dᵢₙ* are selected such that the antenna is in compliance with the dimensions of the pressure chamber and keg (i.e. available space), the position of the RFID tag, as well as the requirements on the generated magnetic field at the RFID tag in order to comply with standards, such as are ISO/IEC 15693 and ISO/IEC 14443. Taking into account the above requirements and preferences, the outer diameter of the substantially planar annular antenna may be between 70 mm and 110 mm, preferably between 80 mm and 100 mm, more preferably between 87 mm and 97 mm, such as 92 mm.

Preferably, the design of the antenna is selected such that the magnetic field is maximized outside the antenna in the X-Y dimension at the distance of the RFID tag in the X-Y plane, since the RFID tag may be located circumferentially outside the antenna on the outer rim of the closure.

Trace width and spacing are parameters of planar antennas, such as the substantially planar annular antenna of the presently disclosed radio-frequency identification-equipped pressure chamber. The substantially planar annular antenna may be a spiral antenna. The spiral antenna may have a trace width w between 0.3 mm and 0.7 mm, such as 0.5 mm and a trace space g between 0.3 mm and 0.7 mm, such as 0.5 mm.

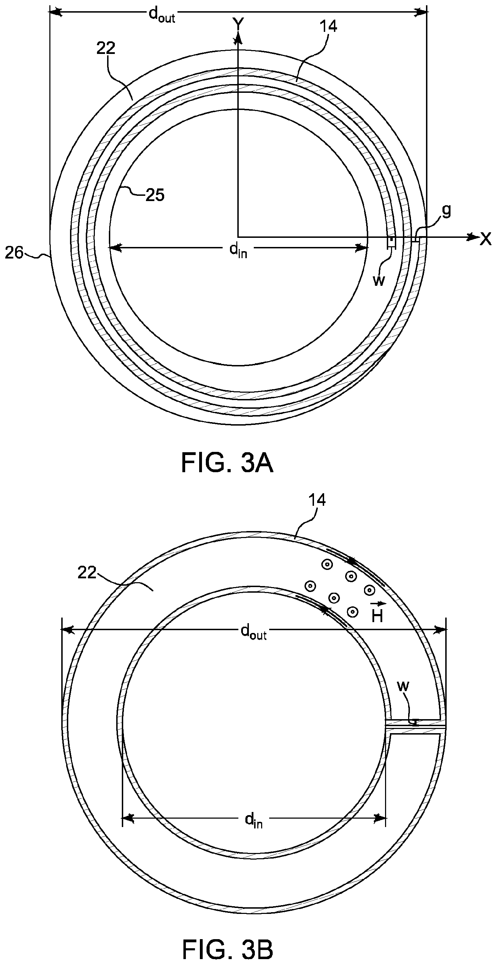

If the substantially planar annular antenna is a single turn antenna, it may have a trace width w of 1 mm and form a loop along the outer diameter *dₒᵤₜ* and an inner diameter *dᵢₙ* of the substantially planar annular antenna, as shown in the example of fig. 3B.

In the embodiment wherein the substantially planar annular antenna is a two turn antenna, the two turn antenna may have a trace width w between 0.3 mm and 0.7 mm, such as 0.5 mm, and a trace space g between 0.2 mm and 0.7 mm, such as 0.5 mm, and wherein the two turns form a loop along the outer diameter *dₒᵤₜ* and an inner diameter *dᵢₙ* of the substantially planar annular antenna. The two turns may be wrapped along a line orthogonal to the substantially circular inner edge and substantially circular outer edge.

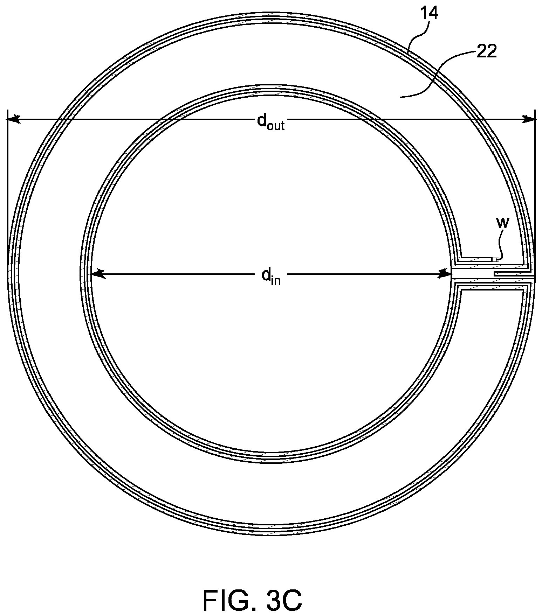

Figs. 3A, 3B and 3C show embodiments of a substantially planar annular antenna. Fig. 3A shows a spiral antenna. Fig. 3B shows a single turn antenna. Fig. 3C shows a two turn antenna.

Example of fig. 3A: spiral antenna: Flat spiral antennas are known for their planar designed suitable for integration in, for example, a printed circuit board. Since the orientation of the plane where the tag antenna lies is orthogonal in relation to the plane of the reader antenna, the importance of the vertical component (Z-axis) of the field is limited as it does not produce the magnetic flux in the tag. The component that creates a net magnetic flux on the tag can be thought off as the curling behavior of the produced magnetic field at the center of the coil.

Example of fig. 3B: single turn antenna: In this embodiment the field is created closer to the periphery of the antenna where the RFID/NFC tag is located. The magnetic field is produced in the middle of the two traces of the antenna by two opposing currents as shown in fig. 3B.

Example of fig. 3C: two turn antenna: In this embodiment the two turns form a loop along the outer diameter *dₒᵤₜ* and an inner diameter *dᵢₙ* of the substantially planar annular antenna.

### Matching network

The radio-frequency identification-equipped pressure chamber may further comprise a matching network, which is typically placed between the interrogation circuit and the antenna. RF transmission lines have a characteristic impedance, which is a factor in RF circuitry. Preferably, impedances are matched to prevent standing waves and to ensure efficient transfer of power from source to load. It is desirable that the antenna is impedance matched in the operation environment so that it operates in the desired frequency band with maximum efficiency within the RFID spectrum of 125 kHz - 5,4GHz. For the presently disclosed radio-frequency identification-equipped pressure chamber, which may operate at e.g. 13.56 MHz, a matching network may be designed according to the example of fig. 4.

### Pressure system

The disclosure further relates to a pressure system for a beverage comprising the presently disclosed radio-frequency identification-equipped pressure chamber and a collapsible beverage container having a radio-frequency identification tag. The radio-frequency identification-equipped pressure may be any of the above embodiments.

The pressure system can thereby be seen as an assembly comprising a collapsible beverage container and a pressure chamber for accommodating and encapsulating the collapsible beverage container. The pressure system may be part of a beverage dispensing system in the form of a modular system comprising a plurality of collapsible beverage containers and pressure chambers sharing a common tapping line.

In particular, the pressure chamber of the pressure system may comprise:
∘ a lid part; and
∘ a base part, said lid and said base part defining a sealed inner space for accommodating and encapsulating the collapsible beverage container, said base part comprising:
   ▪ an inner connector part adapted to be engaged to the beverage outlet, said inner connector part arranged on an inside of the base part; and
   ▪ an outer substantially annular gasket part arranged on the inside of the base part and surrounding the inner connector part, said outer substantially annular gasket part adapted to be engaged with a corresponding hollow annular space of the closure of the collapsible beverage container, the substantially annular gasket part comprising a substantially planar annular antenna adapted to propagate radio waves to the radio-frequency identification tag.

Alternatively, the inner connector part may be arranged on an inside of the lid part, and the outer substantially annular gasket part may be arranged on the inside of the lid part.

The collapsible beverage container preferably comprise a closure with a beverage outlet. In a preferred embodiment, the closure has an outer rim and a radio-frequency identification tag arranged on said rim. In one embodiment, the closure has an outer substantially cylindrical outer rim and a substantially cylindrical inner rim. The outlet of the collapsible container may be connected through an inner cylindrical or tubular connection inside the inner rim. The closure may further comprise a top wall covering at least the annular section defined by the inner rim and the outer rim. The outer rim, inner rim and top wall may thereby define the hollow annular space of the closure.

When assembled the RFID tag on the collapsible container and the interrogation antenna and reader will enable monitoring useful information about the status of the pressure chamber and the keg itself, thereby increasing safety of the beverage dispensing system. The system can transmit and process information, in particular the system can process and store information about the beverage in the collapsible container both in terms of brand (content), remaining volume, days on the tap and so forth. The pressure status of the chamber can likewise be monitored, and a pressure drop to zero can be used to indicate that a new collapsible beverage container has been inserted into the system.

### Detailed description of drawings

The invention will in the following be described in greater detail with reference to the accompanying drawings. The drawings are exemplary and are intended to illustrate some of the features of the presently disclosed radio-frequency identification-equipped pressure chamber and pressure system for a beverage, and are not to be construed as limiting to the presently disclosed invention.

Fig. 1A shows a cross-section of an outer substantially annular gasket part (10) of a base part or lid part of a pressure chamber inserted in a corresponding hollow annular space (24) of a closure of a beverage container. The substantially annular gasket part (10) comprises a substantially planar annular antenna (14) arranged in a space between the annular gasket part (10) and a top wall (11) of the closure. The closure has, besides the top wall (10) an outer rim (12), on which an RFID tag (8) is arranged, and an inner rim (13). The substantially annular gasket part (10) comprises a keg gasket locking flange (15), which constitutes a top section of the outer substantially annular gasket part (10). Under the keg gasket locking flange (15), there is a, preferably resilient, keg gasket (16). The keg gasket locking flange (15) has a top surface (18) towards the top wall (11) of the closure. In fig. 1B the substantially planar annular antenna (14) arranged between the annular keg gasket part (16) and keg gasket locking flange (15).

Fig. 2 shows a cross-section of an outer substantially annular gasket part (10) of a base part (5) or lid part of a pressure chamber (1) partly inserted in a closure (17) of a keg (2). The substantially planar annular antenna and RFID tag are not mounted in fig. 2. The substantially planar annular antenna can be mounted in the antenna space (21). The substantially annular gasket part (10) comprises a keg gasket locking flange (15), which constitutes a top section of the outer substantially annular gasket part (10). Under the keg gasket locking flange (15), there is a, preferably resilient, keg gasket (16). The annular antenna may be arranged between these two sections for maximum protection (illustrated in Fig. 1B). The keg gasket locking flange (15) has a top surface (18) towards the top wall (11) of the closure (17). The top surface of the outer substantially annular gasket part (10) has an annular inner section (19) and an annular outer section (20). The substantially planar annular antenna (not visible in fig. 2) may alternatively be arranged on the annular outer section (20), optionally covered by a sheath, or, optionally integrated in, such as molded into, the substantially annular gasket part (10). The base part (5) of the pressure chamber (1) comprises an inner connector part (9) adapted to be engaged to a corresponding beverage container outlet (23). The closure (17) has, besides the top wall (10) an outer rim (12), on which an RFID tag (not visible in fig. 2) may be arranged, and an inner rim (13).

Fig. 3A shows an embodiment of a substantially planar annular antenna (14), in the form of a spiral antenna, integrated in a base piece (22), such as a printed circuit board or a piece of plastic. The substantially planar annular antenna (14) has a substantially circular inner edge (25) and a substantially circular outer edge (26). The substantially planar annular antenna (14) has an outer diameter *dₒᵤₜ* and an inner diameter *dᵢₙ*.

Fig. 3B shows an embodiment of a substantially planar annular antenna (14), in the form of a single turn antenna. The substantially planar annular antenna (14) has an outer diameter *dₒᵤₜ* and an inner diameter *dᵢₙ*.

Fig. 3C shows an embodiment of a substantially planar annular antenna (14), in the form of a two turn antenna. The substantially planar annular antenna (14) has an outer diameter *dₒᵤₜ* and an inner diameter *dᵢₙ*.The two turns form a loop along the outer diameter *dₒᵤₜ* and an inner diameter *dᵢₙ* of the substantially planar annular antenna. The two turns are wrapped along a line orthogonal to the substantially circular inner edge and substantially circular outer edge.

Fig. 4 shows an example of a simplified schematic of a matching network for the presently disclosed radio-frequency identification-equipped pressure chamber.

Fig. 5 shows a perspective view of a modular beverage dispensing system (27) comprising three pressure chambers (1) with collapsible beverage-filled containers (2). The pressure chambers (1) each comprise a rigid base part (5) and a lid part (6). The beverage container (2), also known as keg, is of the collapsible type made of a collapsible polymeric material, thus the term collapsible beverage container. The collapsible beverage container (2) defines a beverage filled space containing the beverage (3), typically being a carbonated beverage such as beer. The beverage container (2) may also comprise a gas filled head space at its top portion, above the level of the beverage inside the beverage container (2). The lid part (6) and the rigid base part (5) are separable, but during operation, they are sealed together for defining the inner space (4) for accommodating the beverage container (2). The lid part (6) may e.g. be made of rubber. The collapsible beverage container (2) includes a closure (17) for cooperation with a coupler of a beverage dispensing system (27) through the base part (5), thereby connecting the collapsible beverage container (2) to a tapping line (28). The tapping line (28) passes through a cooling device (7) and further on to a tapping device (29).

### Reference numerals

- 1: - radio-frequency identification-equipped pressure chamber
- 2: - beverage container
- 3: - beverage
- 4: - sealed inner space
- 5: - base part
- 6: - lid part
- 7: - cooling device
- 8: - RFID-tag
- 9: - inner connector part of the coupler
- 10: - outer substantially annular gasket part of the coupler
- 11: - top wall (of closure)
- 12: - outer rim (of closure)
- 13: - inner rim (of closure)
- 14: - substantially planar annular antenna (interrogation antenna)
- 15: - keg gasket locking flange
- 16: - keg gasket
- 17: - closure
- 18: - top surface (of keg gasket locking flange (15))
- 19: - annular inner section (of keg gasket locking flange (15))
- 20: - annular outer section (of keg gasket locking flange (15))
- 21: - antenna space
- 22: - base piece / printed circuit board (interrogation reader)
- 23: - beverage container outlet
- 24: - hollow annular space
- 25: - inner edge (of substantially planar annular antenna)
- 26: - outer edge (of substantially planar annular antenna)
- 27: - beverage dispensing system
- 28: - tapping line
- 29: - tapping device
- 30: - tapping line opening in lid

## Claims

1. A radio-frequency identification-equipped pressure chamber (1) for a beverage container (2), said pressure chamber comprising:
- a lid part (6);
- a base part (5), said lid and said base part defining a sealed inner space (4) for accommodating and encapsulating said beverage container (2), said base part (5) or lid part (6) comprising:
∘ an inner connector part (9) adapted to be engaged to a corresponding beverage container outlet (23), said inner connector part (9) arranged on an inside of the base part (5) or lid part (6); and
∘ an outer substantially annular gasket part (10) arranged on the inside of the base part (5) or lid part (6) and surrounding the inner connector part (9), said outer substantially annular gasket part (10) adapted to be engaged with a corresponding hollow annular space (24) of a closure of the beverage container (2),
**characterized in that**;
∘ the outer substantially annular gasket part (10) comprises a substantially planar annular antenna adapted to propagate radio waves to a radio-frequency identification tag (8) arranged on an outer rim (12) of the closure.

2. The radio-frequency identification-equipped pressure chamber (1) according to claim 1, wherein the outer substantially annular gasket part (10) is shaped to be introduced into the corresponding hollow annular space (24) of the closure of the beverage container (2) into a sealed configuration.

3. The radio-frequency identification-equipped pressure chamber (1) according to claim 2, wherein the outer substantially annular gasket part (10) comprises a top surface (18) having an annular inner section (19) and an annular outer section (20), wherein the annular outer section (20) is arranged closer than the annular inner section (19) to a top wall of the closure (11) in the sealed configuration, and wherein the annular inner section (19) of the top surface (18) and the top wall of the closure (11) define an antenna space (21) for the substantially planar annular antenna (14) in the sealed configuration.

4. The radio-frequency identification-equipped pressure chamber (1) according to claim 1 or 2, wherein the outer substantially annular gasket part (10) comprises a keg gasket locking flange (15), the keg gasket locking flange (15) constituting a top section of the outer substantially annular gasket part and wherein the substantially planar annular antenna is integrated in said top section.

5. The radio-frequency identification-equipped pressure chamber (1) according to any of the preceding claims, wherein the outer substantially annular gasket part (10) further comprises a keg gasket (16) arranged under the keg gasket locking flange (15), preferably wherein keg gasket (16) is made of a resilient material, or a material more resilient than that of the keg gasket locking flange (15).

6. The radio-frequency identification-equipped pressure chamber (1) according to claim 5, wherein the substantially planar annular antenna (14) is arranged between the keg gasket locking flange (15) and the keg gasket (16).

7. The radio-frequency identification-equipped pressure chamber (1) according to any of the preceding claims, wherein the substantially planar annular antenna (14) is integrated in a substantially planar annular printed circuit board.

8. The radio-frequency identification-equipped pressure chamber (1) according to any of the preceding claims, wherein the substantially planar annular antenna (14) has a substantially circular inner edge (25) and a substantially circular outer edge (26), wherein the substantially planar annular antenna (14) is a spiral antenna, such as a two turn spiral antenna, a single turn antenna or a two turn antenna, the substantially planar annular antenna having an outer diameter *dₒᵤₜ* and an inner diameter *dᵢₙ*.

9. The radio-frequency identification-equipped pressure chamber (1) according to claim 8; wherein the two turn antenna has a trace width w between 0.3 mm and 0.7 mm, such as 0.5 mm, and a trace space g between 0.2 mm and 0.7 mm, such as 0.5 mm, and wherein the two turns form a loop along the outer diameter *dₒᵤₜ* and an inner diameter *dᵢₙ* of the substantially planar annular antenna (14).

10. The radio-frequency identification-equipped pressure chamber (1) according to any of the preceding claims, wherein substantially planar annular antenna (14) is arranged with a first offset in height in relation to the radio-frequency identification tag (8) and with a second offset in circumferential distance from the outer edge of the substantially planar annular antenna (26) to the radio-frequency identification tag (8).

11. The radio-frequency identification-equipped pressure chamber (1) according to claim 10, wherein the first offset is between 5.5 mm and 15.5 mm, preferably between 7.5 mm and 13.5 mm, such as 10.5 mm.

12. The radio-frequency identification-equipped pressure chamber (1) according to any of claims 10-11, wherein the second offset is between 10.7 mm and 22.7 mm, preferably between 13.7 mm and 19.7 mm, such as 16.7 mm

13. The radio-frequency identification-equipped pressure chamber (1) according to any of the preceding claims, wherein the substantially planar annular antenna (14) and the radio-frequency identification tag (8) extend in substantially orthogonal directions, and wherein the substantially planar annular antenna (14) is arranged to generate a magnetic field component orthogonal to the radio-frequency identification tag (8), wherein the magnetic field component has a local maximum at the radio-frequency identification tag (8).

14. The radio-frequency identification-equipped pressure chamber (1) according to any of the preceding claims, wherein the radio-frequency identification is near-field communication and the radio-frequency identification tag (8) is a near-field communication tag.

15. A pressure system for a beverage (3) comprising:
- a collapsible beverage container (2) comprising a closure (17) with a beverage outlet (23), the closure having an outer rim (12) and a radio-frequency identification tag (8) arranged on said rim;
- a pressure chamber comprising:
∘ a lid part (6);
∘ a base part (5), said lid (6) and said base part (5) defining a sealed inner space (4) for accommodating and encapsulating the collapsible beverage container (2), said base part (5) or lid part (6) comprising:
▪ an inner connector part (9) adapted to be engaged to the beverage outlet (23), said inner connector part (9) arranged on an inside of the base part (5) or lid part (6); and
▪ an outer substantially annular gasket part (10) arranged on the inside of the base part (5) or lid part (6) and surrounding the inner connector part (9), said outer substantially annular gasket part (10) adapted to be engaged with a corresponding hollow annular space (24) of the closure (17) of the collapsible beverage container (2),
**characterized in that**;
▪ the outer substantially annular gasket part (10) comprises a substantially planar annular antenna (14) adapted to propagate radio waves to the radio-frequency identification tag (8).

16. The pressure system according to claim 15, wherein the pressure chamber is the radio-frequency identification-equipped pressure chamber (1) according to any of claims 1-14.

## Patentansprüche

1. Druckkammer (1) mit Radiofrequenz-Identifikation für einen Getränkebehälter (2), wobei die Druckkammer Folgendes umfasst:
- ein Deckelteil (6);
- ein Basisteil (5), wobei der Deckel und das Basisteil einen abgedichteten Innenraum (4) zum Aufnehmen und Verkapseln des Getränkebehälters (2) definieren, wobei das Basisteil (5) oder das Deckelteil (6) Folgendes umfasst:
∘ ein inneres Verbinderteil (9), das dazu geeignet ist, mit einem entsprechenden Getränkebehälterauslass (23) in Eingriff gebracht zu werden, wobei das innere Verbinderteil (9) an einer Innenseite des Basisteils (5) oder Deckelteils (6) angeordnet ist; und
∘ ein äußeres, im Wesentlichen ringförmiges Dichtungsteil (10), das an der Innenseite des Basisteils (5) oder des Deckelteils (6) angeordnet ist und das innere Verbinderteil (9) umgibt, wobei das äußere, im Wesentlichen ringförmige Dichtungsteil (10) dazu geeignet ist, mit einem entsprechenden hohlen Ringraum (24) eines Verschlusses des Getränkebehälters (2) in Eingriff gebracht zu werden,
**dadurch gekennzeichnet, dass**;
∘ das äußere, im Wesentlichen ringförmige Dichtungsteil (10) eine im Wesentlichen ebene ringförmige Antenne umfasst, die dazu geeignet ist, Funkwellen zu einem Radiofrequenz-Identifikationskennzeichen (8), das an einem Außenrand (12) des Verschlusses angeordnet ist, zu propagieren.

2. Druckkammer (1) mit Radiofrequenz-Identifikation nach Anspruch 1, **dadurch gekennzeichnet, dass** das äußere, im Wesentlichen ringförmige Dichtungsteil (10) so geformt ist, dass es in den entsprechenden hohlen Ringraum (24) des Verschlusses des Getränkebehälters (2) dichtend einführbar ist.

3. Druckkammer (1) mit Radiofrequenz-Identifikation nach Anspruch 2, wobei das äußere, im Wesentlichen ringförmige Dichtungsteil (10) eine Deckfläche (18) mit einem ringförmigen Innenabschnitt (19) und einem ringförmigen Außenabschnitt (20) umfasst, wobei der ringförmige Außenabschnitt (20) näher als der ringförmige Innenabschnitt (19) an einer Deckwand des Verschlusses (11) in der abgedichteten Konfiguration angeordnet ist, und wobei der ringförmige Innenabschnitt (19) der Deckfläche (18) und die Deckwand des Verschlusses (11) einen Antennenraum (21) für die im Wesentlichen ebene ringförmige Antenne (14) in der abgedichteten Konfiguration definieren.

4. Druckkammer (1) mit Radiofrequenz-Identifikation nach Anspruch 1 oder 2, wobei das äußere, im Wesentlichen ringförmige Dichtungsteil (10) einen Keg-Dichtung-Verriegelungsflansch (15) umfasst, wobei der Keg-Dichtung-Verriegelungsflansch (15) einen oberen Abschnitt des äußeren, im Wesentlichen ringförmigen Dichtungsteils bildet, und wobei die im Wesentlichen ebene ringförmige Antenne in dem oberen Abschnitt integriert ist.

5. Druckkammer (1) mit Radiofrequenz-Identifikation nach einem der vorhergehenden Ansprüche, wobei das äußere, im Wesentlichen ringförmige Dichtungsteil (10) ferner eine Keg-Dichtung (16) umfasst, die unter dem Keg-Dichtung-Verriegelungsflansch (15) angeordnet ist, wobei vorzugsweise die Keg-Dichtung (16) aus einem elastischen Material oder einem Material hergestellt ist, das elastischer als das des Keg-Dichtung-Verriegelungsflansches (15) ist.

6. Druckkammer (1) mit Radiofrequenz-Identifikation nach Anspruch 5, wobei die im Wesentlichen ebene ringförmige Antenne (14) zwischen dem Keg-Dichtung-Verriegelungsflansch (15) und der Keg-Dichtung (16) angeordnet ist.

7. Druckkammer (1) mit Radiofrequenz-Identifikation nach einem der vorhergehenden Ansprüche, wobei die im Wesentlichen ebene ringförmige Antenne (14) in einer im Wesentlichen ebenen ringförmigen Leiterplatte integriert ist.

8. Druckkammer (1) mit Radiofrequenz-Identifikation nach einem der vorhergehenden Ansprüche, wobei die im Wesentlichen ebene ringförmige Antenne (14) einen im Wesentlichen kreisförmigen Innenrand (25) und einen im Wesentlichen kreisförmigen Außenrand (26) aufweist, wobei die im Wesentlichen ebene ringförmige Antenne (14) eine Spiralantenne ist, wie etwa eine Zweiwindungsspiralantenne, eine Einwindungsantenne oder eine Zweiwindungsantenne, wobei die im Wesentlichen ebene ringförmige Antenne einen Außendurchmesser *d*ₒᵤₜ *und einen Innendurchmesser d*ᵢₙ aufweist.

9. Druckkammer (1) mit Radiofrequenz-Identifikation nach Anspruch 8, **dadurch gekennzeichnet, dass** die Zweiwindungsantenne eine Spurbreite *w* zwischen 0,3 mm und 0,7 mm, wie etwa 0,5 mm, und einen Spurraum *g* zwischen 0,2 mm und 0,7 mm, wie etwa 0,5 mm, aufweist und dass die beiden Windungen eine Schleife entlang des Außendurchmessers *d*ₒᵤₜ und eines Innendurchmessers *d*ᵢₙ der im Wesentlichen ebenen Ringantenne (14) bilden.

10. Druckkammer (1) mit Radiofrequenz-Identifikation nach einem der vorhergehenden Ansprüche, wobei eine im Wesentlichen ebene ringförmige Antenne (14) mit einem ersten Höhenversatz in Bezug auf das Radiofrequenz-Identifikationskennzeichen (8) und mit einem zweiten Umfangsversatz in einem Umfangsabstand von dem Außenrand der im Wesentlichen ebenen ringförmigen Antenne (26) zu der Radiofrequenzkennzeichnung (8) angeordnet ist.

11. Druckkammer (1) mit Radiofrequenz-Identifikation nach Anspruch 10, wobei der erste Versatz zwischen 5,5 mm und 15,5 mm, vorzugsweise zwischen 7,5 mm und 13,5 mm, wie etwa 10,5 mm, beträgt.

12. Druckkammer (1) mit Radiofrequenz-Identifikation nach einem der Ansprüche 10-11, wobei der zweite Versatz zwischen 10,7 mm und 22,7 mm, vorzugsweise zwischen 13,7 mm und 19,7 mm, wie etwa 16,7 mm, beträgt.

13. Druckkammer (1) mit Radiofrequenz-Identifikation nach einem der vorhergehenden Ansprüche, wobei sich die im Wesentlichen ebene ringförmige Antenne (14) und das Radiofrequenz-Identifikationskennzeichen (8) in im Wesentlichen orthogonalen Richtungen erstrecken, und wobei die im Wesentlichen ebene ringförmige Antenne (14) angeordnet ist, um eine Magnetfeldkomponente orthogonal zu dem Radiofrequenz-Identifikationskennzeichen (8) zu erzeugen, wobei die Magnetfeldkomponente ein lokales Maximum an dem Radiofrequenz-Identifikationskennzeichen (8) aufweist.

14. Druckkammer (1) mit Radiofrequenz-Identifikation nach einem der vorhergehenden Ansprüche, wobei die Radiofrequenz-Identifikation eine Nahfeld-Kommunikation ist und das Radiofrequenz-Identifikationskennzeichen (8) ein Nahfeld-Kommunikationskennzeichen ist.

15. Drucksystem für ein Getränk (3), Folgendes umfassend:
- einen zusammenklappbaren Getränkebehälter (2), umfassend einen Verschluss (17) mit einem Getränkeauslass (23), wobei der Verschluss einen Außenrand (12) und eine auf dem Rand angeordnetes Radiofrequenz-Identifikationskennzeichen (8) aufweist;
- eine Druckkammer, Folgendes umfassend:
∘ ein Deckelteil (6);
∘ ein Basisteil (5), wobei das Deckelteil (6) und das Basisteil (5) einen abgedichteten Innenraum (4) zum Aufnehmen und Verkapseln des zusammenklappbaren Getränkebehälters (2) definieren, wobei das Basisteil (5) oder das Deckelteil (6) Folgendes umfasst:
▪ ein inneres Verbinderteil (9), das dazu geeignet ist, mit dem Getränkebehälterauslass (23) in Eingriff gebracht zu werden, wobei das innere Verbinderteil (9) an einer Innenseite des Basisteils (5) oder Deckelteils (6) angeordnet ist; und
▪ ein äußeres, im Wesentlichen ringförmiges Dichtungsteil (10), das an der Innenseite des Basisteils (5) oder des Deckelteils (6) angeordnet ist und das innere Verbinderteil (9) umgibt, wobei das äußere, im Wesentlichen ringförmige Dichtungsteil (10) dazu geeignet ist, mit einem entsprechenden hohlen Ringraum (24) des Verschlusses (17) des zusammenklappbaren Getränkebehälters (2) in Eingriff gebracht zu werden,
**dadurch gekennzeichnet, dass**;
▪ das äußere, im Wesentlichen ringförmige Dichtungsteil (10) eine im Wesentlichen ebene ringförmige Antenne (14) umfasst, die dazu geeinget ist, das Radiofrequenz-Identifikationskennzeichen (8) zu propagieren.

16. Drucksystem nach Anspruch 15, wobei die Druckkammer die Druckkammer (1) mit Radiofrequenz-Identifikation nach einem der Ansprüche 1-14 ist.

## Revendications

1. Chambre de pression (1) équipée d'une identification par radiofréquence pour un récipient de boisson (2), ladite chambre de pression comprenant :
- une partie couvercle (6) ;
- une partie de base (5), ledit couvercle et ladite partie de base définissant un espace interne étanche (4) destiné à recevoir et encapsuler ledit récipient de boisson (2), ladite partie de base (5) ou partie couvercle (6) comprenant :
∘ une partie de raccord interne (9) conçue pour être en prise avec une sortie de récipient de boisson (23) correspondante, ladite partie de raccord interne (9) étant placée sur un intérieur de la partie de base (5) ou de la partie couvercle (6) ; et
∘ une partie joint (10) externe sensiblement annulaire, placée à l'intérieur de la partie de base (5) ou de la partie couvercle (6) et entourant la partie de raccord interne (9), ladite partie joint (10) externe sensiblement annulaire étant conçue pour venir en prise avec un espace annulaire creux (24) correspondant d'une fermeture du récipient de boisson (2),
**caractérisée en ce que** :
la partie joint (10) externe sensiblement annulaire comprend une antenne annulaire sensiblement plane conçue pour propager des ondes radio vers une étiquette d'identification par radiofréquence (8) placée sur un rebord externe (12) de la fermeture.

2. Chambre de pression (1) équipée d'une identification par radiofréquence selon la revendication 1, dans laquelle la partie joint (10) externe sensiblement annulaire est façonnée pour être introduite dans l'espace annulaire creux (24) correspondant de la fermeture du récipient de boisson (2) dans une configuration étanche.

3. Chambre de pression (1) équipée d'une identification par radiofréquence selon la revendication 2, dans laquelle la partie joint (10) externe sensiblement annulaire comprend une surface supérieure (18) ayant une section interne annulaire (19) et une section externe annulaire (20), dans laquelle la section externe annulaire (20) est placée plus près que la section interne annulaire (19) d'une paroi supérieure de la fermeture (11) dans la configuration étanche, et dans laquelle la section interne annulaire (19) de la surface supérieure (18) et la paroi supérieure de la fermeture (11) définissent un espace d'antenne (21) pour l'antenne annulaire (14) sensiblement plane dans la configuration étanche.

4. Chambre de pression (1) équipée d'une identification par radiofréquence selon la revendication 1 ou 2, dans laquelle la partie joint (10) externe sensiblement annulaire comprend une bride de verrouillage (15) de joint de fût, la bride de verrouillage (15) de joint de fût constituant une section supérieure de la partie joint externe sensiblement annulaire et dans laquelle l'antenne annulaire sensiblement plane est intégrée dans ladite section supérieure.

5. Chambre de pression (1) équipée d'une identification par radiofréquence selon l'une quelconque des revendications précédentes, dans laquelle la partie joint (10) externe sensiblement annulaire comprend en outre un joint de fût (16) placé sous la bride de verrouillage (15) de joint de fût, de préférence dans laquelle le joint de fût (16) est constitué d'un matériau élastique, ou d'un matériau plus élastique que celui de la bride de verrouillage (15) de joint de fût.

6. Chambre de pression (1) équipée d'une identification par radiofréquence selon la revendication 5, dans laquelle l'antenne annulaire (14) sensiblement plane est placée entre la bride de verrouillage (15) de joint de fût et le joint de fût (16).

7. Chambre de pression (1) équipée d'une identification par radiofréquence selon l'une quelconque des revendications précédentes, dans laquelle l'antenne annulaire (14) sensiblement plane est intégrée dans une carte de circuit imprimé annulaire sensiblement plane.

8. Chambre de pression (1) équipée d'une identification par radiofréquence selon l'une quelconque des revendications précédentes, dans laquelle l'antenne annulaire (14) sensiblement plane présente un bord interne (25) sensiblement circulaire et un bord externe (26) sensiblement circulaire, dans laquelle l'antenne annulaire (14) sensiblement plane est une antenne spirale, telle qu'une antenne spirale à deux tours, une antenne simple tour ou une antenne à deux tours, l'antenne annulaire sensiblement plane présentant un diamètre externe *d*ₒᵤₜ et un diamètre interne *d*ᵢₙ.

9. Chambre de pression équipée (1) d'une identification par radiofréquence selon la revendication 8, dans laquelle l'antenne à deux tours présente une largeur de trace *w* comprise entre 0,3 mm et 0,7 mm, par exemple 0,5 mm, et un espace de trace g compris entre 0,2 mm et 0,7 mm, par exemple 0,5 mm, et dans laquelle les deux tours forment une boucle selon le diamètre externe *d*ₒᵤₜ et un diamètre interne *d*ᵢₙ de l'antenne annulaire (14) sensiblement plane.

10. Chambre de pression (1) équipée d'une identification par radiofréquence selon l'une quelconque des revendications précédentes, dans laquelle l'antenne annulaire (14) sensiblement plane est placée avec un premier décalage en hauteur par rapport à l'étiquette d'identification par radiofréquence (8) et avec un second décalage en distance circonférentielle du bord externe de l'antenne annulaire (26) sensiblement plane à l'étiquette d'identification par radiofréquence (8).

11. Chambre de pression (1) équipée d'une identification par radiofréquence selon la revendication 10, dans laquelle le premier décalage est compris entre 5,5 mm et 15,5 mm, de préférence entre 7,5 mm et 13,5 mm, par exemple 10,5 mm.

12. Chambre de pression équipée d'une identification par radiofréquence (1) selon l'une quelconque des revendications 10 à 11, dans laquelle le second décalage est compris entre 10,7 mm et 22,7 mm, de préférence entre 13,7 mm et 19,7 mm, par exemple 16,7 mm.

13. Chambre de pression (1) équipée d'une identification par radiofréquence selon l'une quelconque des revendications précédentes, dans laquelle l'antenne annulaire (14) sensiblement plane et l'étiquette d'identification par radiofréquence (8) s'étendent dans des directions sensiblement orthogonales, et dans laquelle l'antenne annulaire (14) sensiblement plane est placée pour générer une composante de champ magnétique orthogonale à l'étiquette d'identification par radiofréquence (8), dans laquelle la composante de champ magnétique présente un maximum local au niveau de l'étiquette d'identification par radiofréquence (8).

14. Chambre sous pression (1) équipée d'une identification par radiofréquence selon l'une quelconque des revendications précédentes, dans laquelle l'identification par radiofréquence est une communication en champ proche et l'étiquette d'identification par radiofréquence (8) est une étiquette de communication en champ proche.

15. Système de pression pour une boisson (3) comprenant :
- un récipient de boisson (2) pliable comprenant une fermeture (17) avec une sortie de boisson (23), la fermeture présentant un rebord externe (12) et une étiquette d'identification par radiofréquence (8) placée sur ledit rebord ;
- une chambre de pression comprenant :
∘ une partie couvercle (6) ;
∘ une partie de base (5), ledit couvercle (6) et ladite partie de base (5) définissant un espace interne étanche (4) destiné à recevoir et encapsuler ledit récipient de boisson (2) pliable, ladite partie de base (5) ou partie couvercle (6) comprenant :
▪ une partie de raccord interne (9) conçue pour être en prise avec une sortie de boisson (23), ladite partie de raccord interne (9) étant placée sur un intérieur de la partie de base (5) ou de la partie couvercle (6) ; et
▪ une partie joint (10) externe sensiblement annulaire, placée à l'intérieur de la partie de base (5) ou de la partie couvercle (6) et entourant la partie de raccord interne (9), ladite partie joint (10) externe sensiblement annulaire étant conçue pour venir en prise avec un espace annulaire creux (24) correspondant de la fermeture (17) du récipient de boisson (2) pliable,
**caractérisé en ce que** :
▪ la partie joint (10) externe sensiblement annulaire comprend une antenne annulaire (14) sensiblement plane conçue pour propager des ondes radio vers une étiquette d'identification par radiofréquence (8).

16. Système de pression selon la revendication 15, dans laquelle la chambre de pression est la chambre de pression (1) équipée d'une identification par radiofréquence selon l'une quelconque des revendications 1 à 14.
